# EUROPEAN PATENT APPLICATION

(11) **EP 1 521 318 A2**
(43) Date of publication of application: **06.04.2005**
(21) Application number: 04023356.1
(22) Date of filing: 30.09.2004
(51) Int. Cl.: H01M 4/86, H01M 4/88

(54) **Solid oxide fuel cell electrode and method of manufacturing the same**

(30) Priority: 03.10.2003 JP 2003345945
(71) Applicant: NISSAN MOTOR CO., LTD., Yokohama-shi Kanagawa-ken (JP)
(72) Inventor: Song, Dong, Yokohama-shi Kanagawa-ken (JP); Hatano, Masaharu, Yokohama-shi Kanagawa-ken (JP)
(74) Representative: Weber, Joachim, Dr.

(57) **Abstract**

A solid oxide fuel cell electrode of the present invention contains an electrode structure which includes at least one of an electron-oxygen ion mixed conductive material and an electron conductive material and has a three-dimensional network, and a particle which adheres on a surface of the electrode structure and on a surface of a pore within the electrode structure and is made of a material having electron conductivity and electrode catalytic activity. Compared with a conventional electrode, the electrode of the present invention is capable of increasing a length of a three-phase interface to increase an electrode reaction field and improving catalytic activity and electron conductivity.

## Description

### BACKGROUND OF THE INVENTION

### 1. Field of the Invention

The present invention relates to an electrode used as an air electrode or a fuel electrode of a solid oxide fuel cell (SOFC) provided with electrolyte made of solid oxide and to a method of manufacturing the electrode. The present invention also relates to a solid oxide fuel cell using such electrode.

### 2. Description of the Related Art

A fuel cell has attracted much attention as a clean energy source which not only realizes high electrical efficiency but also generates little toxic exhaust gas and thus is friendly to the earth. A fuel cell has gone into an actual use as a power source for a movable object such as an automobile.

A fuel cell is a device which converts chemical energy into electric energy exploiting an electrochemical reaction. Amongst various kinds of fuel cells, a SOFC uses solid oxide with oxygen ion conductivity, such as yttria-doped zirconia (8YSZ) and substitutional cerium oxide (for example, samarium-doped ceria (SDC)), as electrolyte. The SOFC is also provided, on one side of the electrolyte, with a porous air electrode made of an oxide material in the perovskite structure, such as LaSrMnO and LaSrCoO. Provided on the other side of the electrolyte of the SOFC is a porous fuel electrode made of nickel (Ni) or a cermet of Ni and solid electrolyte. The air electrode and the fuel electrode form a power generating portion. Fuel gas such as hydrogen and hydrocarbon, and oxidant gas such as air are supplied from outside to the fuel electrode side and to the air electrode side, respectively, to generate electricity. The barrier between the fuel electrode and the air electrode is the foregoing solid electrolyte which is gas impermeable. Incidentally, operation temperature of the SOFC is generally about 1000 °C.

There is a known electrode used for such SOFC, which is obtained by providing electron conductive particles to the skeleton of a porous sintered body made of an oxygen ion conductive material and/or an electron-oxygen ion mixed conductive material and having a three-dimensional network (see Japanese Patent Application Laid-Open No. 2000-200614).

### SUMMARY OF THE INVENTION

However, in the SOFC electrode described in this publication, the sintered body is immersed into slurry containing the particles and then baked at high temperature (1200 °C) in order for the particles to adhere to the sintered body. Therefore, sintering of the particles progresses and the specific surface area of the particles is reduced, which causes a reduction of a reaction interface of the electrode. Once the reaction interface of the electrode is reduced, reaction resistance of the electrode increases, which may cause a reduction of SOFC's output.

The present invention has been accomplished in the light of the above problem of the conventional SOFC electrode. The object of the present invention is to provide a SOFC electrode capable of increasing a length of a three-phase interface to increase an electrode reaction field and improving catalytic activity and electron conductivity. Another object of the present invention is to simplify a method of manufacturing such electrode.

The first aspect of the present invention provides a solid oxide fuel cell electrode comprising: an electrode structure which includes at least one of an electron-oxygen ion mixed conductive material and an electron conductive material, and has a three-dimensional network; and a particle which adheres on a surface of the electrode structure and on a surface of a pore within the electrode structure, and is made of a material having electron conductivity and electrode catalytic activity.

The second aspect of the present invention provides a method of manufacturing a solid oxide fuel cell electrode comprising: preparing an electrode structure which includes at least one of an electron-oxygen ion mixed conductive material and an electron conductive material, and has a three-dimensional network; bringing a foam sheet made of metal with electron conductivity and electrode catalytic activity into contact with the electrode structure; and heating the foam sheet and the electrode structure at predetermined temperature for a predetermined period of time so as to allow a particle of the metal to adhere to the electrode structure.

The third aspect of the present invention provides a solid oxide fuel cell comprising: an electrolyte layer made of solid oxide; and an electrode provided at least one side of the electrolyte layer, the electrode comprising: an electrode structure which includes at least one of an electron-oxygen ion mixed conductive material and an electron conductive material, and has a three-dimensional network; and a particle which adheres on a surface of the electrode structure and on a surface of a pore within the electrode structure, and is made of a material having electron conductivity and electrode catalytic activity.

### BRIEF DESCRIPTION OF THE DRAWINGS

The invention will now be described with reference to the accompanying drawings wherein;
FIG. 1A is a scanning electron microscope (SEM) view showing a state of adhesion of Ag particles on a surface of a SOFC electrode of the present invention;
FIG. 1B is a SEM view showing a state of adhesion of Ag particles in a cross section of the SOFC electrode of the present invention;
FIG. 2 is a schematic view showing a structure of the SOFC formed in Examples of the present invention; and
FIG. 3A is a table showing specifications of the SOFCs in Examples and Comparative Examples;
FIG. 3B is a table showing performance evaluation results of the SOFCs in Examples and Comparative Examples.

### DETAILED DESCRIPTION OF THE PREFERRED EMBODIMENTS

Hereinafter, description will be made of embodiments of the present invention with reference to the drawings.

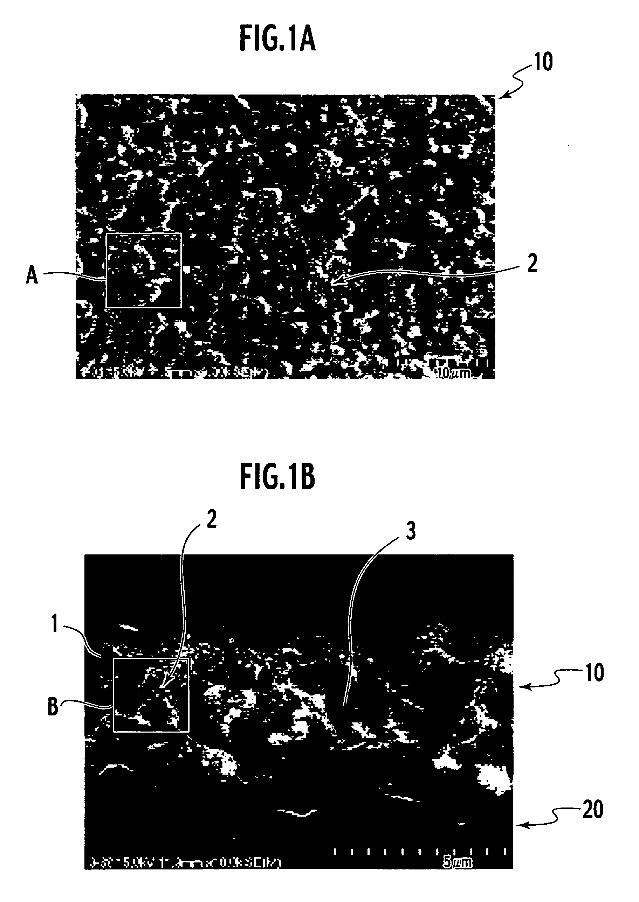

As shown in FIGS. 1A and 1B, a SOFC electrode 10 of the present invention is characterized by being provided on an electrolyte layer 20. Further, the SOFC electrode 10 is also characterized in that particles 2 adhere to the entire surface of a porous electrode structure 1, that is, the entire surface of the porous electrode structure 1 including surfaces of pores 3 which are located inside of the electrode structure 1 and three-dimensionally communicate with the outside. The porous electrode structure 1 is made of an electron-oxygen ion mixed conductive material and/or an electron conductive material, and has a three-dimensional network. The particles 2 are made of a material with electron conductivity and electrode catalytic activity which is necessary in order to function as the SOFC electrode. As shown in FIGS. 1A and 1B, the three-dimensional network of the electrode structure 1 herein means that the pores 3 are present almost uniformly in the electrode structure and materials constructing the electrode structure 1 are linked to each other. This means that an oxygen ion conduction path and an electron conduction path are formed from the electrolyte layer 20 through the surface of the electrode 10.

The SOFC electrode 10 of this invention is formed in a manner where the particles with electron conductivity and the electrode catalytic activity are allowed to adhere onto the entire surface of the electrode structure 1 having the three-dimensional network. Accordingly, the specific surface area of the electrode increases, the reaction interface functioning as the electrode expands, and electrode reaction resistance is reduced. Further, since the extremely fine particles 2 are dispersed over the surface of the electrode structure 1, electrode catalytic activity and electron conductivity of the electrode are improved, thus reducing reaction resistance of the electrode.

Where the SOFC electrode of this invention is used as a fuel electrode, a material of the above-mentioned electrode structure may be a metal material (an electron conductive material) such as platinum (Pt), nickel (Ni) and copper (Cu), a cermet material (an electron-oxygen ion mixed conductive material) such as Ni-SDC (samarium-doped ceria), Ni-YSZ (yttria-stabilized zirconia), Ni-CGO (cerium-gallium composite oxide, gallium-doped ceria) and Cu-CeO₂, or a mixed material thereof.

Where the SOFC electrode is used as an air electrode, a material of the aforementioned electrode structure is a metal material (an electron conductive material) such as platinum (Pt) and silver (Ag), or a composite oxide (an electron-oxygen ion mixed conductive material) such as LSM (La_{1-X}Sr_{X}MnO₃), LCM (La_{1-X}Ca_{X}MnO₃), LSC (La_{1-X}Sr_{X}CoO₃) and SSC (Sm_{1-X}Sr_{X}CoO₃).

The above material is sintered at 900 to 1300 °C, thus forming the electrode structure with the three-dimensional network. Sintering temperature of the electrode is a very important parameter in forming such electrode structure. With a low sintering temperature, the porous electrode with the three-dimensional network is easily made. However, if the sintering temperature is too low, adhesion between the electrode and the electrolyte is weakened. For example, where the material of the air electrode is SSC and the material of the electrolyte layer is LSGM (La-Sr-Ga-Mg based composite oxide), the porous network is easily obtained at sintering temperature of 1100 °C.

In the SOFC electrode 10 of this invention, the particles 2 made of a material with electron conductivity and electrode catalytic activity are dispersed three-dimensionally into the electrode and adhere to the entire surface, including the top surface and inside, of the electrode structure 1 having the three-dimensional network. Accordingly, electron conductivity, reaction activity or reaction interface of the entire electrode is greatly improved, resulting in a dramatic improvement of electrode performance. Where the electrode structure 1 is made of metal only, an electrode reaction occurs only at a contact interface between the electrode 10 and the electrolyte layer 20. Therefore, it is preferred that the particles 2 adhere to the contact interface between the electrode 10 and the electrolyte 20.

When the electrode structure of the fuel electrode is made of Ni metal or Ni cermet, there has been a situation where the electrode reaction field is reduced because Ni is easily condensed by sintering at high temperature. However, condensation of Ni is suppressed by adhesion of the foregoing particles onto the electrode structure as described in this invention, preventing a reduction of the electrode reaction field.

Where the above-described particles with electron conductivity and electrode catalytic activity are used for the fuel electrode, the material of the particles may be silver (Ag), platinum (Pt), gold (Au), ruthenium (Ru), rhodium (Rh), copper (Cu), nickel (Ni) or an alloy containing these metals. When used for the air electrode, the material of the particles may be silver (Ag), platinum (Pt), gold (Au), or an alloy containing these metals. Amongst these materials, Au, Cu are Ag are preferably used as they have properties which enable their particles to move at high temperature and thus to be dispersed into the electrode structure easily. Ag having a low melting point (961 °C), in particular, is dispersed at temperature ranging from about 600 to 800 °C. Therefore, use of Ag enables very easy manufacturing of the SOFC electrode as described later.

Note that Ag itself may be used as a material of the electrode structure of the air electrode. However, since Ag does not have oxygen ion conductivity, the reaction field of the electrode is present only at a two-phase interface between the electrode and the electrolyte. Therefore, adhesion of Ag onto a material of the electrode structure, such as LSC and SSC, increases reaction activity of the electrode and the reaction field of the electrode, enabling a great reduction of reaction resistance of the electrode.

In SOFC electrode of this invention, it is preferred that the abovementioned particle, which adheres to the electrode structure with the three-dimensional network, has a particle size larger than or equal to 1/40 but not exceeding 1/2 of the size of the pore in the above electrode structure, and more preferably larger than or equal to 1/35 but not exceeding 1/10 of the same. The particle to adhere, having a particle size smaller than 1/40 of the pore in the electrode, is not effective enough to improve electron conductivity of the electrode. On the contrary, where the particle size is over 1/2 of the pore, reaction area of the electrode becomes small, resulting in a reduction of power density of the SOFC. Note that the pore size means a mean value of the pores in the electrode structure, and can be measured by mercury porosimetry or the like.

Here, the size of the pore in the electrode structure can be adjusted by changing sintering temperature, a particle size of the material of the electrode structure, or a particle size of a pore-forming agent (polymer bead). Meanwhile, the size of the particle to adhere can be adjusted by changing the particles which constitute foam metal.

Moreover, it is preferred that an area ratio of the abovementioned particles in the electrode structure's surface ranges from 50 to 95% in any direction, and the area ratio ranging from 60 to 90% is more preferred.

The area ratio herein means a ratio of an apparent area of the adhering particles to that of the electrode structure having three-dimensional curved surface, in other words, a ratio of projected areas of the same in a predetermined direction. Specifically, the area ratio means a ratio of an area occupied by the particles 2 in an arbitrary unit area A shown in FIG. 1A. The area ratio can be obtained by measurement of the particle areas per arbitrary unit area shown in FIG. 1A by using a SEM picture or the like. Note that the particle areas can be obtained by measurements of the size and number of the particles using a SEM picture.

Where the area ratio of the particles is smaller than 50%, sufficient electron conductivity in a direction along the electrode's surface cannot be obtained. Where the area ratio of the particles is over 95%, an essential function of the electrode will be lost.

Further, where a ratio of the particles occupying a cross section of the abovementioned electrode structure, that is, specifically a ratio of areas of the particles 2 in an arbitrary unit area B in FIG. 1B, is smaller 50%, the electrode reaction area does not increase sufficiently. On the contrary, where the ratio is over 95%, the electrode structure with ion conductivity is covered with the particles almost completely, causing a reduction of the electrode reaction field. Thus, the electrode performance will be lost.

Furthermore, it is preferred that the layer thickness of the SOFC electrode ranges from 3 to 15 µm. The thickness within this range optimizes the electrode performance. Where the thickness of the electrode is smaller than 3 µm, electrical collecting resistance of the electrode becomes large. On the other hand, where the electrode thickness is larger than 15 µm, it is difficult to allow the particles to be fully dispersed in a direction of the electrode thickness when the particles adhere on the electrode structure, and the particles are thus not distributed uniformly. Hence, where this electrode is formed on the electrolyte to construct a fuel cell, an amount of the particles in the two phase interface between the electrode and the electrolyte may not be enough to reach full effectiveness of adhesion of the particles onto the electrode structure.

A method of manufacturing the SOFC electrode of this invention is described. First of all, the porous electrode structure 1 is fabricated on the electrolyte 20. As stated earlier, the electrode structure 1 is obtained by sintering the material of the electrode structure at 900 to 1300 °C. Thereafter, a foam metal sheet containing the particle material such as Ag is brought into contact with the top surface of the abovementioned electrode structure 1 and held in air at high temperature for a predetermined period of time. Preferred holding temperature ranges from 600 to 800 °C, and preferred holding period is 1 to 5 hours. At temperature within the above range, the particle material contained in the foam metal sheet is dispersed so that the particle material can adhere on the surface of the electrode structure through the surfaces of the pores located inside of the electrode structure, uniformly and easily. Further, unlike the conventional technique, there is no need to bake the particle material at 1000 °C or higher after adhesion of the particles on the electrode structure. Therefore, the particles are not sintered together, and the fine particles are highly dispersed over the electrode structure, resulting in a dramatic improvement of the electrode performance.

It is particularly preferred to use Ag as the particle material in manufacturing the electrode of this invention by this manufacturing method. As stated earlier, since Ag has a low melting point, the particles can be dispersed over and into the electrode structure uniformly.

The SOFC electrode(s) is stuck on one side of the electrolyte layer made of solid oxide as the fuel electrode or air electrode, or on both sides of the electrolyte layer as the fuel electrode and air electrodes, respectively, so that the SOFC can be formed. Thus, the high-performance SOFC based on the abovementioned excellent electrode performance can be obtained.

The abovementioned electrolyte layer may be a material with oxygen ion conductivity, for example, YSZ, SSZ (scandium stabilized zirconia), SDC and LSGM.

Hereinafter, specific description of the present invention is given based on Examples. Note that the present invention is not limited to these Examples.

### (Example 1)

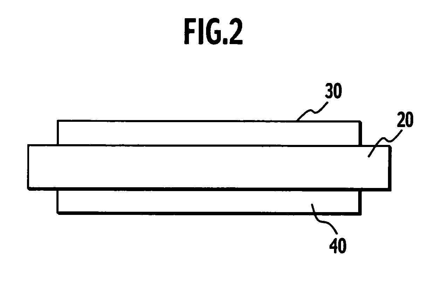

As shown in FIG. 2, an electrolyte layer 20 made of LSGM and having a thickness of 300 µm was made as the base of a cell. Slurry was then applied on one side of the electrolyte layer 20. This slurry contained about 80% by weight of LSC with a particle size of 1 µm as a raw material of an electrode structure, ethyl cellulose as a binder, and butyl acetate as a dispersion medium. Thereafter, the slurry was dried and further baked for 2 hours in air at 1100 °C. Thus obtained was a 10 µm-thick air electrode layer 30 made of LSC and having a three-dimensional network.

Another slurry was applied onto the other side of the electrolyte layer 20. This slurry contained about 80% by weight of Ni powder with a particle size of 1 µm and YSZ powder with a particle size of 0.5 µm as a raw material of an electrode structure. The slurry further contained ethyl cellulose as a binder and butyl acetate as a dispersion medium. Thereafter, the slurry was dried and further baked for 2 hours in air at 1300 °C. Thus obtained was a 10 µm-thick fuel electrode layer 40 made of Ni-YSZ cermet and having three-dimensional network.

Next, a foam metal sheet made of Ag was mounted on the above air electrode layer 30 and pressed at a pressure of 20 kg/cm². The cell with the foam metal sheet mounted thereon was then heated for 2 hours at 650 °C. Thus, Ag was dispersed over the surfaces of the air electrode 30 and pores in the air electrode, allowing Ag particles to adhere to the surfaces.

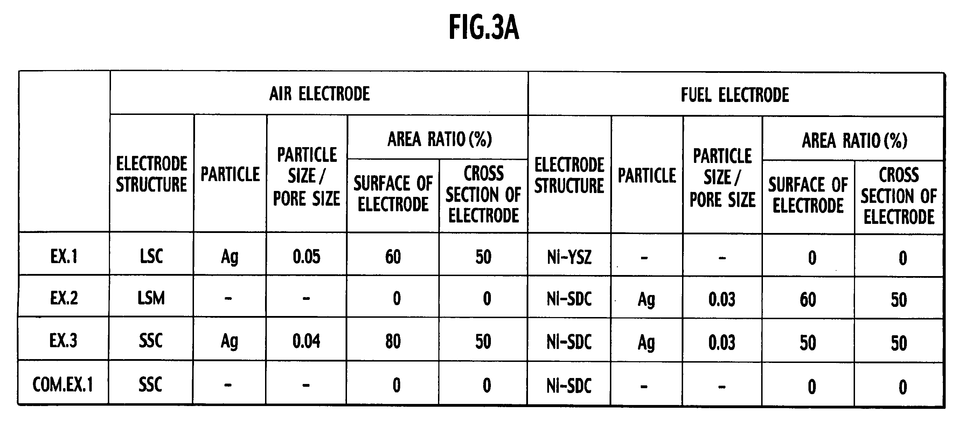

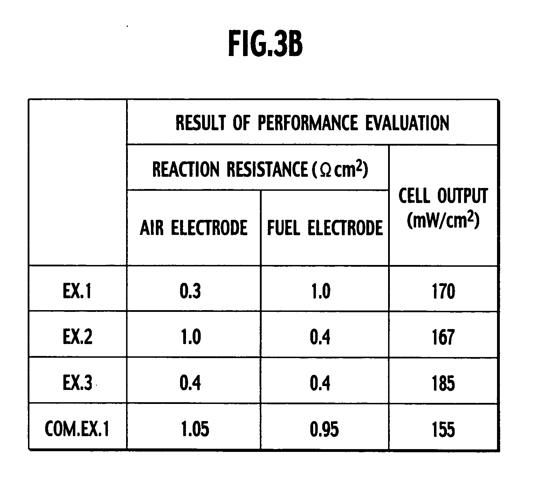

In the SOFC thus obtained, reaction resistance of its air electrode and fuel electrode was measured. In addition, the output performance of the SOFC was tested. Note that, during the output performance test, a current-voltage measurement was carried out at test temperature of 600 °C in the test atmosphere of Air/H₂, using 5% humidified hydrogen. The results are shown in FIGS. 3A and 3B with the specification of the SOFC.

### (Example 2)

Similarly to Example 1, slurry was applied onto one side of the electrolyte layer 20. This slurry contained about 80% by weight of LSM with a particle size of 1 µm as a raw material of an electrode structure, ethyl cellulose as a binder and butyl acetate as a dispersion medium. Thereafter, the slurry was dried and further baked for 2 hours in air at 1100 °C. Thus obtained was a 10 µm-thick air electrode layer 30 made of LSM and having three-dimensional network.

Next, another slurry was applied onto the other side of the electrolyte layer 20. This slurry contained about 80% by weight of Ni powder with a particle size of 1 µm and SDC powder with a particle size of 0.5 µm as a raw material of an electrode structure. The slurry further contained ethyl cellulose as a binder and butyl acetate as a dispersion medium. Thereafter, the slurry was dried and further baked for 2 hours in air at 1300 °C. Thus obtained was a 10 µm-thick fuel electrode layer 40 made of Ni-SDC cermet and having three-dimensional network.

Next, a foam metal sheet made of Ag was mounted on the above fuel electrode layer 40 and pressed similarly to Example 1. The cell with the foam metal sheet mounted thereon was then heated for 2 hours at 650 °C. Thus, Ag was dispersed over the surfaces of the fuel electrode 40 and pores in the fuel electrode layer, allowing Ag particles to adhere to the surfaces.

The performance of the SOFC thus obtained was tested similarly to Example 1, and the results are also shown in FIGS. 3A and 3B.

### (Example 3)

Similarly to Example 1, slurry was applied onto one side of the electrolyte layer 20. This slurry contains about 80% by weight of SSC with a particle size of 1 µm as a raw material of an electrode structure, a binder and a dispersion medium (slurry viscosity is 20Pa·S). Thereafter, the slurry was dried and further baked for 2 hours in air at 1100 °C. Thus obtained was a 10 µm-thick air electrode layer 30 made of SSC and having three-dimensional network.

Next, another slurry was applied onto the other side of the electrolyte layer 20. This slurry contained about 80% by weight of Ni powder with a particle size of 1 µm and SDC powder with a particle size of 0.5 µm as a raw material of an electrode structure. The slurry further contained ethyl cellulose as a binder and butyl acetate as a dispersion medium. Thereafter, the slurry was dried and further baked for 2 hours in air at 1300 °C. Thus obtained was a 10 µm-thick fuel electrode layer 40 made of Ni-SDC cermet and having three-dimensional network.

Subsequently, foam metal sheets made of Ag were mounted on the abovementioned air electrode layer 30 and fuel electrode layer 40, respectively, and pressed similarly to the above Examples. The cell with the foam metal sheets mounted thereon was then heated for 2 hours at 650 °C. Thus, Ag was dispersed over the surfaces of the both electrodes 30 and 40 and pores in both electrodes, allowing Ag particles to adhere to the surfaces.

The performance of the SOFC thus obtained was tested similarly to Example 1, and the results are also shown in FIGS. 3A and 3B.

### (Comparative Example 1)

Similarly to the aforementioned Example 3, an air electrode layer 30 made of SSC and a fuel electrode layer 40 made of Ni-SDC cermet were formed on the sides of the electrolyte layer 20, respectively. Thereafter, the performance of the cell thus obtained was tested similarly to Example 1 without adhesion of Ag particles thereon. The results are also shown in FIGS. 3A and 3B.

As evident from the results in FIGS. 3A and 3B, in virtue of adhesion of particles like Ag particles having both electron conductivity and electron catalytic activity onto the surface of the electrode structure having a three-dimensional network, the surface including the inside of the pores, a significant reduction in electrode reaction resistance is realized in both the air electrode and the fuel electrode. It was confirmed that application of the SOFC electrode of this invention enables an improvement of SOFC output performance.

The entire content of a Japanese Patent Application No. P2003-345945 with a filing date of October 3, 2003 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A solid oxide fuel cell electrode, comprising:
an electrode structure (1) which includes at least one of an electron-oxygen ion mixed conductive material and an electron conductive material, and has a three-dimensional network; and
a particle (2) which adheres on a surface of the electrode structure (1) and on a surface of a pore (3) within the electrode structure (1), and is made of a material having electron conductivity and electrode catalytic activity.

2. An electrode according to claim 1,
wherein, where the electrode (10) is used as a fuel electrode (40), the electrode structure (1) contains at least one of platinum, nickel, copper, cermet of nickel and samarium-doped ceria, cermet of nickel and yttria-stabilized zirconia, cermet of nickel and cerium-gallium composite oxide, cermet of nickel and gallium-doped ceria, and copper-ceria cermet.

3. An electrode according to claims 1 or 2,
wherein, where the electrode (10) is used as an air electrode (30), the electrode structure (1) contains at least one of platinum, silver, La_{1-X}Sr_{X}MnO₃, La_{1-X}Ca_{X}MnO₃, La_{1-X}Sr_{X}CoO₃ and Sm_{1-X}Sr_{X}CoO₃.

4. An electrode according to any of claims 1 through 3,
wherein the particle (2) contains at least one of silver, platinum, ruthenium, rhodium, copper, nickel, and an alloy containing these metals.

5. An electrode according to claim 4,
wherein the particle (2) is made of silver.

6. An electrode according to any of claims 1 through 5,
wherein a size of the particle (2) is larger than or equal to 1/40 but not exceeding 1/2 of a mean size of the pore (3) of the electrode structure (1).

7. An electrode according to any of claims 1 through 6,
wherein an area ratio of the particle (2) in the surface of the electrode structure (1) ranges from 50 to 95%.

8. An electrode according to any of claims 1 through 7,
wherein an area ratio of the particle (2) in a cross section of the electrode structure (1) ranges from 50 to 95%.

9. An electrode according to any of claims 1 through 8,
wherein a layer thickness of the electrode structure (1) ranges from 3 to 15 µm.

10. A method of manufacturing a solid oxide fuel cell electrode, comprising:
preparing an electrode structure (1) which includes at least one of an electron-oxygen ion mixed conductive material and an electron conductive material, and has a three-dimensional network;
bringing a foam sheet made of metal with electron conductivity and electrode catalytic activity into contact with the electrode structure (1); and
heating the foam sheet and the electrode structure (1) at predetermined temperature for a predetermined period of time so as to allow a particle (2) of the metal to adhere to the electrode structure (1).

11. A method of manufacturing an electrode according to claim 10,
wherein the foam metal sheet is made of silver.

12. A method of manufacturing an electrode according to claims 10 or 11,
wherein the predetermined temperature ranges from 600 to 800 °C.

13. A method of manufacturing an electrode according to any of claims 10 through 12,
wherein the predetermined period of time ranges 1 to 5 hours.

14. A solid oxide fuel cell, comprising:
an electrolyte layer (20) made of solid oxide; and
an electrode (10) provided at least one side of the electrolyte layer (20),
the electrode (10) comprising:
an electrode structure (1) which includes at least one of an electron-oxygen ion mixed conductive material and an electron conductive material, and has a three-dimensional network; and
a particle (2) which adheres on a surface of the electrode structure (1) and on a surface of a pore (3) within the electrode structure (1), and is made of a material having electron conductivity and electrode catalytic activity.
